Europäisches Patentamt

European Patent Office

Office européen des brevets

(19)

(11) **EP 0 717 513 B1**

(12) **EUROPEAN PATENT SPECIFICATION**

(45) Date of publication and mention
of the grant of the patent:
**07.08.2002 Bulletin 2002/32**

(51) Int Cl.7: **H04B 10/08**, H04B 10/17

(21) Application number: **94119657.8**

(22) Date of filing: **13.12.1994**

(54) **Method and system for indicating an optical transmit amplifier fault**

Verfahren und Vorrichtung zur Fehleranzeige eines optischen Sendeverstärkers

Méthode et système pour indiquer un défaut dans un amplificateur optique de transmission

(84) Designated Contracting States:
**AT BE CH DE ES FR GB IT LI NL SE**

(43) Date of publication of application:
**19.06.1996 Bulletin 1996/25**

(73) Proprietor: **ALCATEL N.V.**
**2288 BH Rijswijk (NL)**

(72) Inventors:
• **Moothart, Michael R.**
**Garland, TX 70544 (US)**

• **Dugan, John Michael**
**Richardson, TX 75081 (US)**

(74) Representative: **Wörz, Volker et al**
**Dreiss, Fuhlendorf,**
**Steimle & Becker,**
**Postfach 10 37 62**
**70032 Stuttgart (DE)**

(56) References cited:
**EP-A- 0 554 126**          **EP-A- 0 581 138**
**EP-A- 0 618 691**          **GB-A- 2 242 091**
**GB-A- 2 268 852**

EP 0 717 513 B1

**Description**

BACKGROUND OF THE INVENTION

In the telecommunications industry, optical transmission devices permit communication of telecommunication signals over optical fibers. In order to increase the distance that an optical signal may travel, it is necessary to amplify the optical signal at selected points along its transmission path. A device that is becoming more prevalent in amplifying optical signals is known as an optical transmit amplifier. One type of optical transmit amplifier is known as an erbium-doped fiber amplifier (EDFA).

It is necessary to assure that the EDFA amplifies not only the power, but also the modulated optical signals that it receives. That is, an optical signal in which there is no modulated information can reach the EDFA. Also, modulated information in the signal can be lost during EDFA amplification. The EDFA, nevertheless, will amplify this optical signal. The output optical signal, however, will have no meaning or value, because it contains no modulated information. An average power detector will indicate an output signal from the EDFA. However, such a detector cannot determine that the output contains modulated information.

There is a need, consequently, for a method and system that detects the proper operation of an optical transmit amplifier such as an EDFA. Such a method and system is needed that detects not only the presence of an optical output signal, but also that modulation exists in the signal.

There is a further need for a method and system for indicating an optical transmit amplifier fault in the event of either or both a loss of modulation and a loss of optical signal power.

Document EP-A- 0 618 691 discloses a device for assessing the transmission quality of an optical amplifier equipment, comprising two couplers being placed before and after the amplifier to sample part of the power of an optical propagation signal.

SUMMARY OF THE INVENTION

The present invention, accordingly, provides a method and system for indicating an optical transmit amplifier fault in a telecommunications system that substantially eliminates or reduces disadvantages and problems associated with previously developed optical transmit amplifier fault indicator methods and systems.

According to one aspect of the invention, there is provided an optical transmit amplifier fault indicator system that indicates the failure of an optical transmit amplifier and that includes an input loss circuit for receiving a portion of an optical input signal that goes to the optical transmit amplifier and that indicates that the level of the optical input signal falls below a predetermined optical input signal level. The indicator system also includes an output failure circuit for receiving a portion of an optical output signal from the optical transmit amplifier for determining that the level of the optical output signal falls below a predetermined output signal level. The indicator system further includes a modulation detector circuit that also receives a portion of the optical output signal for determining that a failure in modulation exists in the optical output signal.

The modulation detector includes a modulation conversion circuit for converting modulation in the optical output signal into a measurable signal. The measurable signal has a level within a first predetermined range in the presence of modulation in the optical output signal. The level is within a second predetermined range in the absence of modulation. The optical transmit amplifier fault indicator system has application for EDFA systems and includes within the modulation conversion circuit a photodiode and 100 MHz bandwidth amplifier that generate the measurable signal. The detector circuit associates with the photodiode and 100 MHz amplifier for determining that the measurable signal level falls with the first predetermined range. The detector circuit includes a peak-to-peak detector and a variable gain DC amplifier for amplifying the measurable signal.

A technical advantage of the present invention is that it detects modulation failures in an optical transmit amplifier such as an EDFA. The system of the present invention adds a degree of protection not currently present in systems that monitor the performance of optical transmit amplifiers. According to the present invention, there is provided a method of determining the location of a failure in the optical transmission of an optical transmit amplifier. This also improves the effectiveness of monitoring the optical transmit amplifier performance.

Another technical advantage of the present invention is that it covers a broad range of modulation data rates. For example, in one embodiment data rates ranging from 155.52 Mb/s to 9.95 Gb/s are possible. Even within this range of operation, the present invention provides a simple circuit that a manufacturer may fabricate on a known circuit board such as a printed circuit board.

Yet a further technical advantage of the present invention is that it is transparent to varying data rates. Thus, as data rates change with information into the optical transmit amplifier, the present invention continues to monitor the modulation of the optical transmit amplifier.

BRIEF DESCRIPTION OF THE DRAWINGS

The above and other technical advantages of the present invention will become more readily understood when the invention is described in further detail below, reference being made to the accompanying drawings in which like reference numerals represent like parts throughout and in which:

FIGURE 1 provides an exemplary application of an optical transmit amplifier within an optical telecommunications network;
FIGURE 2 is a block diagram of the present embodiment as applied to a typical optical transmit amplifier; and
FIGURE 3 illustrates, using a block diagram, one embodiment of the modulation detector that the present embodiment uses.

DETAILED DESCRIPTION OF THE ILLUSTRATIVE EMBODIMENT

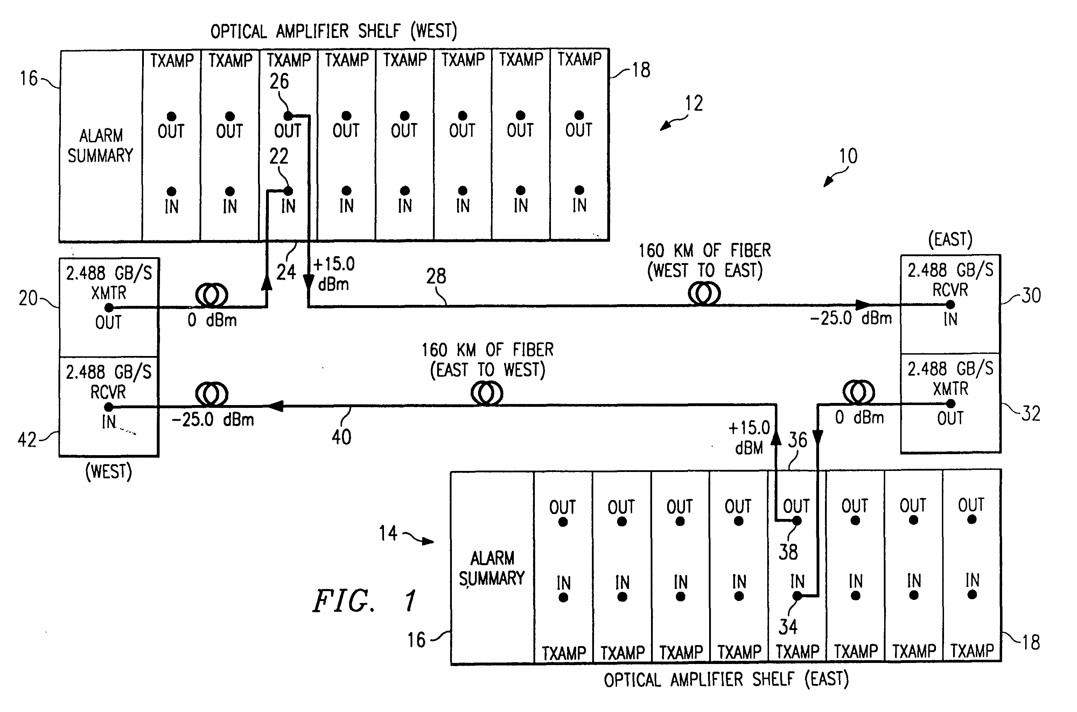

The following illustrative embodiment of the present invention appears in the FIGURES wherein like numerals are used for like and corresponding parts of the various drawings.
Referring to FIGURE 1, there appears a typical application for an optical amplifier transmission system 10 wherein communications occur between optical amplifier shelf 12 and optical amplifier shelf 14. In each optical amplifier shelf 12 and 14, there is an alarm summary module 16 and a set of optical transmit amplifiers 18. Associated with each optical transmit amplifier 18 is an optical transmitter and receiver. As a particular example, in FIGURE 1 transmitter circuit 20 provides a 2.488 Gb/s optical signal at 0 dBm to input 22 of transmit amplifier 24. Optical transmit amplifier 24 amplifies the optical signal and provides an optical output signal from output 26 that has a signal level of +15.0 dBm along fiber 28.
In the example of FIGURE 1, fiber 28 has a length of 160 km. As a result of this distance, the signal that reaches receiver circuit 30 has a level of -25.0 dBm. In communicating from optical amplifier shelf 14, transmitter circuit 32 provides, for example, the 0 dBm 2.488 Gb/s signal to input 34 of transmit amplifier 36. From output 38, the optical signal travels along fiber 40 at an initial level of +15.0 dBm. The length of fiber 40 is 160 km, the distance of which reduces the level of optical output signal from optical amplifier shelf 14 to a level of -25.0 dB at the input of receiver circuit 42.

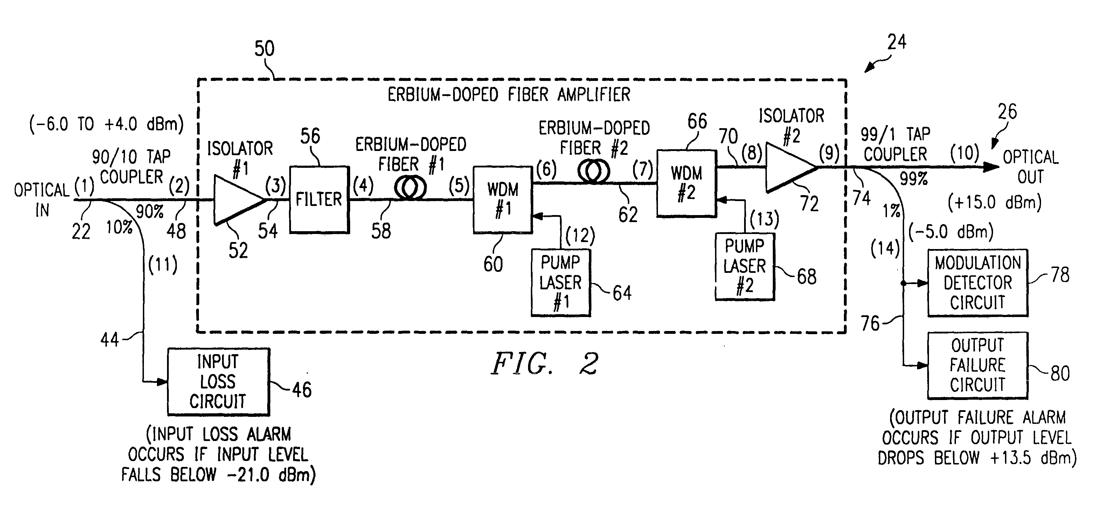

In FIGURE 2 there appears a schematic block diagram of one embodiment of the present invention that provides fault indication for optical transmit amplifier 24. In particular, for a given optical transmit amplifier, optical input 22 at a normal wavelength of 1550 nm goes to transmit amplifier 24. In the embodiment of FIGURE 2, optical input 22 splits so that 10% of optical input 22 goes along path 44 to input loss circuit 46. The remaining 90% of optical input 22 at a normal wavelength of 1550 nm goes along path 48 to erbium-doped fiber amplifier (EDFA) 50 within optical transmit amplifier 24.
Within EDFA 50, isolator 52 transports the 1550 nm optical signal in one direction along input fiber 48 from the remaining EDFA 50 circuitry. From isolator 52, the optical signal travels along fiber 54 to filter 56. Filter 56 filters the optical signal and passes it to erbium-doped fiber 58. Pump laser 64 passes through wavelength division multiplexer (WDM) 60 and excites the ions of erbium-doped fiber 58, resulting in a predetermined amount of 1550 nm optical signal amplification. From erbium-doped fiber 58, the amplified optical signal passes through WDM 60 to erbium-doped fiber 62. Similarly, pump laser 68 passes through WDM 66 and excites the ions of erbium-doped fiber resulting in 1550 nm optical signal amplification. From erbium-doped fiber 62, WDM 66 receives the 1550 nm optical signal input and outputs amplified optical signal along path 70 to isolator 72. Isolator 72 provides output signal 74, 99% of which becomes transmit amplifier output 26 and 1% of which goes along tap 76 for modulation detector circuit 78 and output failure circuit 80 to measure.
Transmit amplifier 24 boosts the light of an external 1550 nm laser transmitter to an output level of +15.0 dBm. The gain amplification of transmit amplifier 28 occurs within EDFA 50 by virtue of the optical input signal passing through (a) two 1480 nm pump lasers 64 and 68, (b) two optical wave division multiplexers (WDMs) 60 and 66, (c) two optical isolators 52 and 72, optical filter 56 to block the 1480 nm optical signal, and several meters of erbium-doped fiber 58 and 62. U.S. Patent No. 5,202,780 entitled "Optical Communication System for the Subscriber Area" by Fussanger, et al. and assigned to Alcatel N.V. of Amsterdam, Netherlands, describes in detail a suitable device for use as EDFA 50 and is herein incorporated by reference.
In FIGURE 2, points within transmit amplifier 24 are labelled (1), (2), (3), (4), (5), (6), (7), (8), (9), (10), (11), (12), (13), and (14). TABLE 1, below, relates a failure in each of these locations within transmit amplifier 24 to a failure signal that the present embodiment provides. For example, if a failure occurs between points (2) and (4), whether it be a component failure or a break in erbium-doped fiber 58, the optical output level remains constant at +15.0 dBm, while modulating the amplifier's spontaneous emission (ASE). Modulation detector circuit 78 discerns between the ASE and actual data transmission. Modulation detector circuit 78 produces, in response to the failure between points (2) and (4), an alarm to indicate loss of modulation. In the present embodiment, varying data rates do not affect modulation detector circuit 78 detection, even across the band of 155.52 Mb/s to 9.95 Gb/s.

TABLE 1

| Type of Failure | Resultant Indicator Alarm |
|---|---|
| Fiber break in location (1) | Loss of Input & Loss of Modulation |
| Fiber break in location (2) | Loss of Modulation |
| Fiber break in location (3) | Loss of Modulation |
| Fiber break in location (4) | Loss of Modulation |
| Fiber break in location (5) | Loss of Modulation & Output Fail |
| Fiber break in location (6) | Loss of Modulation & Output Fail |
| Fiber break in location (7) | Loss of Modulation & Output Fail |
| Fiber break in location (8) | Loss of Modulation & Output Fail |
| Fiber break in location (9) | Loss of Modulation & Output Fail |
| Fiber break in location (10) | No Alarm |
| Fiber break in location (11) | Loss of Input |
| Fiber break in location (12) | Possible Loss of Modulation & Output Fail |
| Fiber break in location (13) | Possible Loss of Modulation & Output Fail |
| Fiber break in location (14) | Loss of Modulation & Output Fail |
| Pump lasers (64 and 68) | Pump Laser Fail |

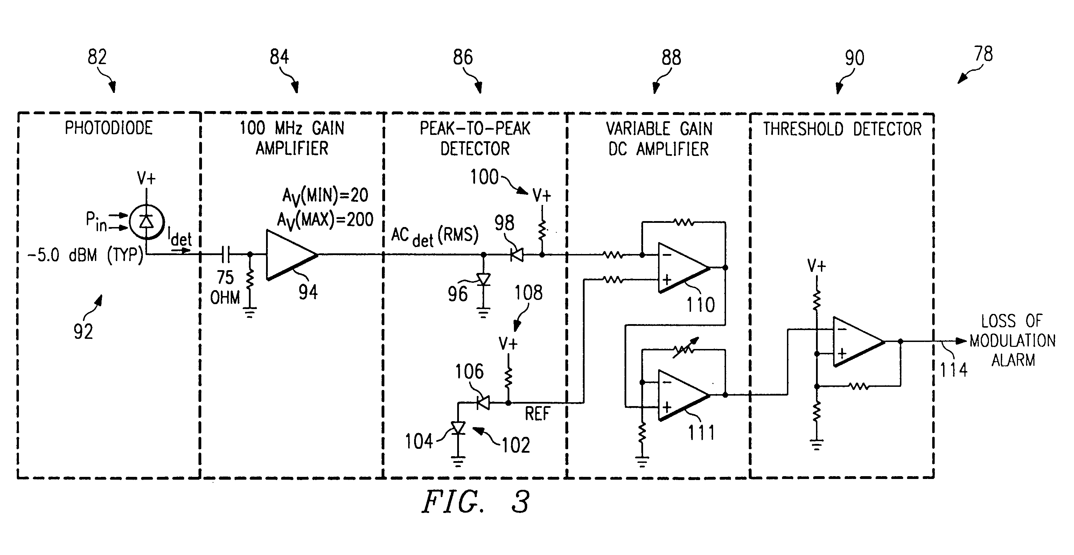

FIGURE 3 shows a block diagram of modulation detector 78 according to one aspect of the present embodiment. In FIGURE 3, modulation detector circuit 78 includes photodiode portion 82 that connects to 100 MHz bandwidth amplifier portion 84. From 100 MHz amplifier 84 portion, the amplified AC signal goes to peak-to-peak detector portion 86. Peak-to-peak detector portion 86 produces a DC signal that goes to variable gain DC amplifier portion 88. Threshold detector portion 90 takes the amplified DC signal from variable gain DC amplifier portion 88 to produce, if appropriate, a loss of modulation alarm signal.

In the operation of modulation detector circuit 78, as the output optical signal passes along optical fiber portion 76 (FIGURE 2) it enters photodiode portion 82. Photodiode portion 82 and variable gain amplifier portion 84 accept the 1550 nm optical data stream that the optical signal carries and demodulates the signal to produce the AC detector signal that peak-to-peak detector portion 86 receives. The AC detect signal may be defined by the following expression:

$$AC_{Detect}(RMS) = 1.414(P_{in}) (R) (R_{in}) (A_v) [ (BW_{P\&A})/(Data\ Rate)]^{\frac{1}{2}},$$

wherein,

$AC_{Det}(RMS) =$   RMS voltage level at the output of the 100 MHz electrical amplifier,
$P_{in} =$   Average optical input power (0.32 mW typical),
$R =$   Responsivity of photodiode (0.8 A/W typical),
$R_{in} =$   Input resistance of electrical amplifier (75 ohm typical),
$A_v =$   Amplifier Gain (10 V/V),
$BW_{P\&A} =$   Equivalent bandwidth frequency of photodiode and 100 MHz amplifier combination (100 MHz typical), and
Data Rate =   Bit rate of data transmission (155.52 Mb/s to 9.95 Gb/s range)

The AC voltage level is routed to peak-to-peak detector. portion 86 that converts the AC signal to a proportional DC signal.

100 MHz amplifier portion 84 includes amplifier 94 which produces an amplified AC signal that goes to peak-to-peak detector portion 86. Peak-to-peak detector portion 86 includes diodes 96 and 98 that use voltage level 100 to produce a DC output to DC amplifier portion 88. In addition, peak-to-peak detector portion 86 includes reference circuit 102 that, likewise, has diodes 104 and 106. Together with voltage level 108 diodes 104 and 106 produce a reference voltage level into amplifier 110. Diodes 104 and 106 provide a temperature compensation reference for the input to DC amplifier 88.

DC amplifiers 110 and 111 amplify the differences between the detected DC signal and the reference DC signals to produce the $DC_{det}$ at line 112 that goes to threshold detector portion 90. Threshold detector portion 90 determines if the $DC_{det}$ is above or below the normal specified limits for intensity modulated optical data transmission. These limits include data rates that range from 622.08 Mb/s to 9.95 Gb/s, in the present embodiment. Depending on the level of the DC signal at line 112, threshold detector portion 190 produces a loss of modulation alarm signal at output 114. If the DC detected level at line 112 is above a predetermined threshold, no loss of modulation alarm occurs. On the other hand, if the DC detector level falls below the predetermined threshold, threshold detector portion 90 produces the loss of modulation alarm signal at line 114. In other words, signals above the predetermined threshold may be considered in a first predetermined range while those below the threshold may be considered in a second predetermined range of signals.

The present embodiment may be formed by a variety of known engineering techniques. Having described the structure and function of the embodiment, its manufacture may proceed through the use of established engineering principles. The manufacture of the present embodiment are, therefore, within the scope of the present invention.

Our technical advantage of the present embodiment is that it detects modulation failures of an optical transmit amplifier such as an EDFA. That is, the system of the present embodiment adds a degree of protection not currently present in systems that monitor the performance of optical transmit amplifiers. This improves the effectiveness of monitoring the optical transmit amplifier performance.

Another technical advantage of the present embodiment is that it can cover a broad range of modulation data rates. For example, data rates ranging from 155.52 Mb/s to 9.95 Gb/s are possible. Thus, as data rates change with information into the optical transmit amplifier, the present embodiment continues to monitor the modulation of the optical transmit amplifier. Even within this range of operation, the present embodiment provides a simple circuit that a manufacturer may fabricate on a known circuit board such as the printed circuit board.

OPERATION

Although operation of the present embodiment is clear from the above description, the following description of an illustrative embodiment appears for completeness. In normal operation, modulation detector circuit 78 converts data stream activity to the proportion DC level, $DC_{det}$. This DC voltage is above a set threshold which results in a "no alarm status." If a fiber break or component failure occurs between points (2) and (4), for example, modulation detector circuit 78 converts the ASE modulation to a proportional DC level. This DC level, however, is below the set threshold voltage of threshold detector circuit 90. This results in an alarm status indicating that although optical transmit amplifier 24 amplifies an optical input signal, the optical signal does not contain information but is, instead, a spontaneous emission from the amplifier. The alarm condition results because the DC level resulting from modulated ASE is at least a factor of 10 below the DC level resulting from the modulated 9.95 Gb/s data stream.

In summary, the present embodiment provides an optical transmit amplifier fault indicator system that indicates the failure of an optical transmit amplifier and that includes an input loss circuit for receiving a portion of an optical input signal to the optical transmit amplifier and that indicates therefrom that the level of the optical input signal falls below a predetermined optical input signal level. The indicator system also includes an output failure circuit for receiving a portion of an optical output signal from the optical transmit amplifier for determining that the level of the optical output signal falls below a predetermined output signal level. The indicator system further includes a modulation detector circuit that even further receives a portion of the optical output signal for determining therefrom that a failure and modulation exists in the optical output signal.

The modulation detector includes a modulation conversion circuit for converting modulation in the optical output signal into a measurable signal. The measurable signal has a level within a first predetermined range in the presence of modulation in the optical output signal. The level is within a second predetermined range in the absence of modulation within the optical output signal. The optical transmit amplifier fault indicator system has application for erbium-doped fiber amplifiers and includes within the modulation conversion circuit a photodiode and 100 MHz amplifier that generate the measurable signal. The detector circuit associates with the photodiode and 100 MHz amplifier for determining that the measurable signal level falls with the first predetermined range. The detector circuit includes a peak-to-peak detector and a variable gain DC amplifier for amplifying the measurable signal.

Although the present invention has been described in detail, it should be understood that various changes, substitutions and alterations can be made hereto without departing from the scope of the invention as defined by the appended claims.

**Claims**

1. An optical transmit amplifier (24) fault indicator system for indicating the failure of an optical transmit amplifier (24), comprising:

   an input (22) loss circuit (46) for receiving a portion (76) of an optical input signal to the optical transmit amplifier (24) indicating therefrom that the level of said optical input signal falls below a predetermined optical input signal level;
   an output (26) failure circuit (80) for receiving a portion (76) of an optical output signal (74) from the optical transmit amplifier (24) for determining that the level of said optical output signal (74) falls below a predetermined output signal level; and **characterized by** comprising:

   a modulation detector circuit (78) also for receiving a portion (76) of said optical output signal (74) and determining therefrom that a failure in modulation exists in said optical output signal (74) of said optical transmit amplifier (24), said modulation detector (78) comprising a modulation conversion circuit for converting modulation in said optical output signal (74) into a measurable signal, said measurable signal having a level within a first predetermined range in the presence of modulation in said optical output signal (74) and within a second predetermined range in the absence of modulation within said optical output signal (74).

2. The system of Claim 1, wherein said optical transmit amplifier (24) comprises an erbium-doped fiber amplifier (50) and said input (22) loss circuit (46), said output (26) failure circuit (80), and said modulation detector circuit (78), associate with said erbium-doped fiber amplifier (50).

3. The system of Claim 1, wherein said modulation conversion circuit comprises a photodiode portion (82) and an amplifier portion (84) for generating a measurable AC signal at a predetermined frequency bandwidth in response to modulation in said optical output signal (74).

4. The system of Claim 3, wherein said modulation detector (78) further comprises a detector circuit portion associated with said photodiode portion (82) and said amplifier portion (84) for detecting the level of said measurable signal.

5. The system of Claim 4, wherein said detector portion (86) comprises a peak-to-peak detector circuit (78) for generating a DC signal in response to said AC signal.

6. The system of Claim 4, wherein said modulation detector (78) further comprises a variable gain DC amplifier portion (88) for amplifying said DC signal.

7. The system of Claim 1, wherein said modulation detector (78) further comprises a threshold detector portion (86) for determining that said measurable signal level is within said second predetermined range.

8. A method for indicating the failure of an optical transmit amplifier (24), comprising the steps of:

   receiving a portion of an optical input signal to the optical input transmit amplifier (24) in an input (22) loss circuit (46);
   indicating from the portion of the optical input signal that the level of the optical input signal falls below a predetermined optical input signal level;
   receiving a portion of an optical output signal (74) from the optical transmit amplifier (24) in an output (26) failure circuit (80);
   indicating that the level of optical output signal (74) falls below a predetermined output signal level;
   receiving a portion of the optical output signal (74) in a modulation detector circuit (78); and
   indicating from the portion of the optical output signal (74) that a failure in modulation exists in the optical output signal (74) of the optical transmit amplifier (24) by converting modulation in the optical output signal (74) into a measurable signal and determining that the measurable signal has a level within a first predetermined range in the presence of modulation in the optical output signal (74) and within a second predetermined range in the absence of modulation within the optical output signal (74).

9. The method of Claim 8, further comprising the step of amplifying the optical input signal using an erbium-doped fiber amplifier (50) circuit.

**10.** The method of Claim 8, further comprising the step of producing a current proportional to the power input to the modulation detector circuit (78) using a photodiode circuit and further generating a measurable signal from the detected current using an amplifier operating at a predetermined frequency bandwidth.

**11.** The method of Claim 10, further comprising the step of determining that the measurable signal falls within the first predetermined range using a detector circuit (78), including a peak-to-peak detector.

**12.** The method of Claim 11, further comprising the step of amplifying the DC signal from the peak-to-peak detector circuit (78).

**13.** The method of Claim 8, further comprising the step of producing a loss of modulation alarm signal (114) in the event that the measurable signal falls below a predetermined threshold level.

**14.** A method for forming an optical transmit amplifier (24) fault indicator system for indicating the failure of an optical transmit amplifier (24), the method of comprising the steps of:

forming an input (22) loss circuit (46) for receiving a portion of an optical input signal to the optical transmit amplifier (24) and indicating therefrom that the level of the optical input signal falls below a predetermined optical input signal level;

forming an output (26) failure circuit (80) for receiving a portion of an optical output signal (74) from the optical transmit amplifier (24) for determining that the level of the optical output signal (74) falls below a predetermined output (26) signal level; and

forming a modulation detector circuit (78) also for receiving a portion of the optical output signal (74) for determining therefrom that a failure in modulation exists in the optical output signal (74) of the optical transmit amplifier (24), the modulation detector (78) comprising a modulation conversion circuit for converting modulation in the optical output signal (74) into a measurable signal, the measurable signal having a level within the first predetermined range in the presence of modulation in the optical output signal (74) and within the second predetermined range in the absence of modulation within the optical output signal (74).

**15.** The method of Claim 14, further comprising the steps of forming a photodiode portion (82) and a 100 MHz amplifier portion (84) of the modulation conversion circuit for generating the measurable signal representing the presence or absence of modulation.

**16.** The method of Claim 15, further comprising the step of forming a detector portion (86) within the modulation detection circuit and associated with the photodiode portion (82) and the amplifier portion (84) for operating at a predetermined frequency bandwidth and determining that the measurable signal level falls within the first predetermined range.

**17.** The method of Claim 16, further comprising the step of forming within the detector circuit (78) a peak-to-peak detector circuit (78).

**18.** The method of Claim 16, further comprising the step of forming a variable gain DC amplifier circuit within the detector portion (86) for amplifying the measurable signal.

**19.** The method of Claim 14, further comprising the step of forming a threshold detector portion (86) within the modulation detector (78) for determining that the measurable signal level is within the second predetermined range and producing a loss of modulation alarm signal (114) in response to the measurable signal falling within the second predetermined range.

**Patentansprüche**

**1.** Anzeigesystem zum Anzeigen eines Fehlers eines optischen Übertragungsverstärkers (24), mit:

- einer Eingangs-(22)-Verlustschaltung (46), zum Empfangen eines Anteils (76) eines optischen Eingangssignals des optischen Übertragungsverstärkers (24), die anhand dessen anzeigt, dass der Pegel des optischen Eingangssignals unter einen vorgegebenen optischen Eingangssignalpegel abfällt;

- einer Ausgangs-(26)-Störungsschaltung (80), zum Empfangen eines Anteils (76) eines optischen Ausgangssignals (74) von dem optischen Übertragungsverstärker (24), zum Bestimmen, dass der Pegel des optischen Ausgangssignals (74) unter einen vorgegebenen Ausgangssignalpegel fällt;

**dadurch gekennzeichnet, dass** es eine Modulationsdetektorschaltung (78) umfasst, ebenfalls zum Empfangen eines Anteils (76) des optischen Ausgangssignals (74) und zum anhand dessen Bestimmen, dass ein Fehler in der Modulation in dem optischen Ausgangssignal (74) des optischen Übertragungsverstärkers (24) vorhanden ist, wobei der Modulationsdetektor (78) eine Modulationsumwandlungsschaltung zum Umwandeln der Modulation in dem optischen Ausgangssignal (74) in ein messbares Signal umfasst, wobei das messbare Signal einen Pegel in einem ersten vorgegebenen Bereich bei Vorhandensein von Modulation in dem optischen Ausgangssignal (74) und in einem zweiten vorgegebenen Bereich bei Fehlen von Modulation in dem optischen Ausgangssignal (74) hat.

2. System nach Anspruch 1 bei dem der optische Übertragungsverstärker (24) einen erbium-dotierten Faserverstärker (50) umfasst und die Eingangs-(22)-Verlustschaltung (46), die Ausgangs-(26)-Störungsschaltung (80) und die Modulationserfassungsschaltung (78) mit dem erbium-dotierten Faserverstärker (50) verknüpft sind.

3. System nach Anspruch 1, bei dem die Modulationsumwandlungsschaltung einen Photodiodenabschnitt (82) und einen Verstärkerabschnitt (84) zum Erzeugen eines messbaren Wechselspannungssignals mit einer vorgegebenen Frequenzbandbreite in Reaktion auf Modulation in dem optischen Ausgangssignal (74) umfasst.

4. System nach Anspruch 3, bei dem der Modulationsdetektor (78) ferner einen mit dem Photodiodenabschnitt (82) und dem Verstärkerabschnitt (84) verknüpften Detektorschaltungsabschnitt zum Erfassen des Pegels des messbaren Signals umfasst.

5. System nach Anspruch 4, bei dem der Detektorabschnitt (86) eine Spitzendetektorschaltung (78) zum Erzeugen eines Gleichspannungssignals in Reaktion auf das Wechselspannungssignal umfasst.

6. System nach Anspruch 4, bei dem der Modulationsdetektor (78) ferner einen Gleichspannungsverstärkerabschnitt mit variabler Verstärkung (88) zum Verstärken des Gleichspannungssignals umfasst.

7. System nach Anspruch 1, bei dem der Modulationsdetektor (78) ferner einen Schnellwertdetektorabschnitt (86) umfasst, zum Bestimmen, dass der messbare Signalpegel in dem zweiten vorgegebenen Bereich ist.

8. Verfahren zum Anzeigen des Versagens eines optischen Übertragungsverstärkers (24), mit den Schritten:

Empfangen eines Anteils eines optischen Eingangssignals für den optischen Eingangsübertragungsverstärker (24) in einer Eingangs-(22)-Verlustschaltung (46) ;

Anzeigen, anhand des Anteils des optischen Eingangssignals, dass der Pegel des optischen Eingangssignals unter einen vorgegebenen optischen Eingangssignalpegel fällt;

Empfangen eines Anteils eines optischen Ausgangssignals (74) von dem optischen Übertragungsverstärker (24) in einer Ausgangs-(26)-Störungsschaltung (80);

Anzeigen, dass der Pegel des optischen Ausgangssignals (74) unter einen vorgegebenen Ausgangssignalpegel fällt;

Empfangen eines Anteils des optischen Ausgangssignals (74) in einer Modulationsdetektorschaltung (78); und

Anzeigen, anhand des Anteils des optischen Ausgangssignals (74), dass eine Störung in der Modulation im optischen Ausgangssignal (74) des optischen Übertragungsverstärkers (24) vorliegt, durch Umwandeln von Modulation in dem optischen Ausgangssignal (74) in ein messbares Signal und Bestimmen, dass das messbare Signal einen Pegel einen ersten vorgegebenen Bereich bei Vorhandensein von Modulation in dem optischen Ausgangssignal (74) und in einem zweiten vorgegebenen Bereich bei Fehlen von Modulation in dem optischen Ausgangssignal (74) hat.

9. Verfahren Anspruch 8, ferner mit dem Schritt des Verstärkens des optischen Eingangssignals unter Verwendung einer erbium-dotierten Faserverstärker-(50)-Schaltung.

**10.** Verfahren nach Anspruch 8, ferner mit dem Schritt des Erzeugens eines Stroms proportional zur in die Modulationserfassungsschaltung (78) eingegebenen Leistung unter Verwendung einer Photodiodenschaltung und ferner Erzeugen eines messbaren Signals aus dem erfassten Strom unter Verwendung eines bei einer vorgegebenen Frequenzbandbreite arbeitenden Verstärkers.

**11.** Verfahren nach Anspruch 10, ferner mit dem Schritt des Bestimmens, dass das messbare Signal in den ersten vorgegebenen Bereich fällt, unter Verwendung eines Detektorschaltung (78) mit einem Spitzendetektor.

**12.** Verfahren Anspruch 11, ferner mit dem Schritt des Verstärkens des Gleichspannungssignals aus der Spitzendetektorschaltung (78).

**13.** Verfahren nach Anspruch 8, ferner mit dem Schritt des Erzeugens eines Modulationsverlust-Alarmsignals (114) in dem Fall, dass das messbare Signal unter einen vorgegebenen Schwellpegel fällt.

**14.** Verfahren zum Bilden eines optischen Übertragungsverstärkers (24), wobei das Verfahren die Schritte umfasst:

- Bilden einer Eingangs-(22)-Verlustschaltung (46), zum Empfangen eines Anteils eines optischen Eingangssignals für den optischen Übertragungsverstärker (24) und anhand dessen Anzeigen, dass der Pegel des optischen Eingangssignals unter einen vorgegebenen optischen Eingangssignalpegel fällt;
- Bilden einer Ausgangs-(26)-Störungsschaltung (80), zum Empfangen eines Anteils eines optischen Ausgangssignals (74) von dem optischen Übertragungsverstärker (24), zum Bestimmen, dass der Pegel des optischen Ausgangssignals (74) unter einen vorgegebenen Signalpegel des Ausgangs (26) fällt; und
- Bilden einer Modulationsdetektorschaltung (78), ebenfalls zum Empfangen eines Anteils des optischen Ausgangssignals (74), um anhand dessen zu bestimmen, dass eine Störung der Modulation in dem optischen Ausgangssignal (74) des optischen Übertragungsverstärkers (24) vorliegt, wobei der Modulationsdetektor (78) eine Modulationsumwandlungsschaltung zum Umwandeln von Modulation in dem optischen Ausgangssignal (74) in ein messbares Signal umfasst, wobei das messbare Signal einen Pegel innerhalb des ersten vorgegebenen Bereichs bei Vorhandensein von Modulation in dem optischen Ausgangssignal (74) und innerhalb des zweiten vorgegebenen Bereichs bei Fehlen von Modulation in dem optischen Ausgangssignal (74) hat.

**15.** Verfahren nach Anspruch 14, ferner mit den Schritten des Erzeugens eines Photodiodenabschnitts (82) und eines 100 MHz-Verstärkerabschnitts (84) der Modulationsumwandlungsschaltung zum Erzeugen des das Vorhandensein oder Fehlen von Modulation darstellenden messbaren Signals.

**16.** Verfahren nach Anspruch 15, ferner mit dem Schritt des Bildens eines Detektorabschnitts (86) in der Modulationserfassungsschaltung, verknüpft mit dem Photodiodenabschnitt (82) und dem Verstärkerabschnitt (84) zum Betreiben bei einer vorgegebenen Frequenzbandbreite und Bestimmen, dass der messbare Signalpegel in den ersten vorgegebenen Bereich fällt.

**17.** Verfahren nach Anspruch 16, ferner mit dem Schritt des Bildens einer Spitzendetektorschaltung (78) in der Detektorschaltung (78).

**18.** Verfahren nach Anspruch 16, ferner mit dem Schritt des Bildens einer Gleichspannungsverstärkerschaltung mit variabler Verstärkung in dem Detektorabschnitt (86) zum Verstärken des messbaren Signals.

**19.** Verfahren nach Anspruch 14, ferner mit dem Schritt des Bildens eines Schwellendetektorabschnitts (86) in dem Modulationsdetektor (78), zum Bestimmen, dass der messbare Signalpegel in dem zweiten vorgegebenen Bereich liegt und Erzeugen eines Modulationsverlust-Alarmsignals (114) in Reaktion auf ein Fallen des messbaren Signals in den zweiten vorgegebenen Bereich.

**Revendications**

**1.** Système d'indication d'un défaut dans un amplificateur optique de transmission (24) pour indiquer la défaillance d'un amplificateur optique de transmission (24), comprenant :

un circuit de perte (46) d'entrée (22) pour recevoir une partie (76) d'un signal optique d'entrée se dirigeant vers l'amplificateur optique de transmission (24) indiquant par là que le niveau dudit signal optique d'entrée tombe au-dessous d'un niveau de signal optique d'entrée prédéterminé ;

un circuit de défaillance (80) de sortie (26) pour recevoir une partie (76) d'un signal optique de sortie (74) provenant de l'amplificateur optique de transmission (24) pour déterminer que le niveau dudit signal optique de sortie (74) tombe au-dessous d'un niveau de signal de sortie prédéterminé, **caractérisé par le fait qu'**il comprend :

un circuit de détection de modulation (78) destiné également à recevoir une partie (76) dudit signal optique de sortie (74) et à déterminer à partir de là qu'une défaillance dans la modulation existe dans ledit signal optique de sortie (74) dudit amplificateur optique de transmission (24), ledit détecteur de modulation (78) comprenant un circuit de conversion de modulation pour convertir la modulation dudit signal optique de sortie (74) en un signal mesurable, ledit signal mesurable ayant un niveau compris à l'intérieur d'une première plage prédéterminée en présence de modulation dans ledit signal optique de sortie (74) et à l'intérieur d'une seconde plage prédéterminée en l'absence de modulation dans ledit signal optique de sortie (74).

2.  Système selon la revendication 1, dans lequel ledit amplificateur optique de transmission (24) comprend un amplificateur EDFA (50) et ledit circuit de perte (46) d'entrée (22), ledit circuit de défaillance (80) de sortie (26), et ledit circuit de détection de modulation (78) sont associés au dit amplificateur EDFA (50).

    Bien que la présente invention ait été décrite en détail, il faut comprendre que plusieurs modifications, substitutions et altérations peuvent y être faites sans sortir du cadre de l'invention tel qu'il est défini par les revendications annexées.

3.  Système selon la revendication 1, dans lequel ledit circuit de conversion de modulation comprend une partie photodiode (82) et une partie amplificateur (84) pour générer un signal AC mesurable avec une largeur de bande de fréquence prédéterminée en réponse à une modulation dudit signal optique de sortie (74).

4.  Système selon la revendication 3, dans lequel ledit détecteur de modulation (78) comprend en outre une partie circuit de détection associée à une dite partie photodiode (82) et à une dite partie amplificateur (84) pour détecter le niveau dudit signal mesurable.

5.  Système selon la revendication 4, dans lequel ladite partie détecteur (86) comprend un circuit de détection pic à pic (78) pour générer un signal DC en réponse au dit signal AC.

6.  Système selon la revendication 4, dans lequel ledit détecteur de modulation (78) comprend en outre une partie amplificateur DC à gain variable (88) pour amplifier ledit signal DC.

7.  Système selon la revendication 1, dans lequel ledit détecteur de modulation (78) comprend en outre une partie détecteur de seuil (86) pour déterminer que ledit niveau du signal mesurable est compris à l'intérieur de ladite seconde plage prédéterminée.

8.  Procédé pour indiquer la défaillance d'un amplificateur optique de transmission (24), comprenant les étapes consistant à :

    recevoir une partie d'un signal optique d'entrée se dirigeant vers l'amplificateur optique de transmission (24) dans un circuit de perte (46) d'entrée (22) ;
    indiquer à partir de la partie du signal optique d'entrée que le niveau du signal optique d'entrée tombe au-dessous d'un niveau de signal optique d'entrée prédéterminé ;
    recevoir une partie d'un signal optique de sortie (74) sortant de l'amplificateur optique de transmission (24) dans un circuit de défaillance (80) de sortie (26) ;
    indiquer que le niveau du signal optique de sortie (74) tombe au-dessous d'un niveau de signal optique de sortie prédéterminé ;
    recevoir une partie du signal optique de sortie (74) dans un circuit de détection de modulation (78) ; et
    indiquer à partir de la partie du signal optique de sortie (74) qu'une défaillance dans la modulation existe dans le signal optique de sortie (74) de l'amplificateur optique de transmission (24) en convertissant la modulation du signal optique de sortie (74) en un signal mesurable et en déterminant que le signal mesurable a un niveau compris à l'intérieur d'une première plage prédéterminée en présence de modulation dans le signal optique de sortie (74) et à l'intérieur d'une seconde plage prédéterminée en l'absence de modulation dans le signal optique de sortie (74).

9. Procédé selon la revendication 8, comprenant en outre l'étape consistant à amplifier le signal optique d'entrée à l'aide d'un circuit amplificateur EDFA (50).

10. Procédé selon la revendication 8, comprenant en outre l'étape consistant à produire un courant proportionnel à l'entrée électrique dans le circuit de détection de modulation (78) en utilisant un circuit photodiode et en générant en outre un signal mesurable à partir du courant détecté à l'aide d'un amplificateur fonctionnant avec une largeur de bande de fréquence prédéterminée.

11. Procédé selon la revendication 10, comprenant en outre l'étape consistant à déterminer que le signal mesurable tombe à l'intérieur de la première plage prédéterminée en utilisant un circuit de détection (78), incluant un détecteur pic à pic.

12. Procédé selon la revendication 11, comprenant en outre l'étape consistant à amplifier le signal DC sortant du circuit de détection pic à pic (78).

13. Procédé selon la revendication 8, comprenant en outre l'étape consistant à produire une perte du signal d'alarme de modulation (114) au cas où le signal mesurable tombe au-dessous d'un niveau de seuil prédéterminé.

14. Procédé pour former un système d'indication d'une faute dans un amplificateur optique de transmission (24) pour indiquer la défaillance d'un amplificateur optique de transmission (24), le procédé comprenant les étapes consistant à :

> former un circuit de perte (46) d'entrée (22) pour recevoir une partie d'un signal optique d'entrée se dirigeant vers l'amplificateur optique de transmission (24) et indiquer par là que le niveau du signal optique d'entrée tombe au-dessous d'un niveau de signal optique d'entrée prédéterminé ;
> former un circuit de défaillance (80) de sortie (26) pour recevoir une partie d'un signal optique de sortie (74) sortant de l'amplificateur optique de transmission (24) pour déterminer que le niveau du signal optique de sortie (74) tombe au-dessous d'un niveau de signal de sortie (26) prédéterminé ; et
> former un circuit de détection de modulation (78) pour recevoir également une partie du signal optique de sortie (74) pour déterminer à partir de là qu'une défaillance dans la modulation existe dans le signal optique de sortie (74) de l'amplificateur optique de transmission (24), le détecteur de modulation (78) comprenant un circuit de conversion de modulation pour convertir la modulation du signal optique de sortie (74) en un signal mesurable, le signal mesurable ayant un niveau compris à l'intérieur de la première plage prédéterminée en présence de modulation dans le signal optique de sortie (74) et à l'intérieur de la seconde plage prédéterminée en l'absence de modulation dans le signal optique de sortie (74).

15. Procédé selon la revendication 14, comprenant en outre les étapes consistant à former une partie photodiode (82) et une partie amplificateur 100 Mhz (84) du circuit de conversion de modulation pour générer le signal mesurable représentant la présence ou l'absence de modulation.

16. Procédé selon la revendication 15, comprenant en outre l'étape consistant à former une partie détecteur (86) à l'intérieur du circuit de détection de modulation et associée à la partie photodiode (82) et à la partie amplificateur (84) pour fonctionner avec une largeur de bande de fréquence prédéterminée et déterminer que le niveau du signal mesurable tombe à l'intérieur de la première plage prédéterminée.

17. Procédé selon la revendication 16, comprenant en outre l'étape consistant à former à l'intérieur du circuit de détection (78) un circuit de détection pic à pic (78).

18. Procédé selon la revendication 16, comprenant en outre l'étape consistant à former un circuit amplificateur DC à gain variable à l'intérieur de la partie détecteur (86) pour amplifier le signal mesurable.

19. Procédé selon la revendication 14, comprenant en outre l'étape consistant à former une partie détecteur de seuil (86) à l'intérieur du détecteur de modulation (78) pour déterminer que le niveau du signal mesurable est compris à l'intérieur de la seconde plage prédéterminée et produire une perte du signal d'alarme de modulation (114) en réponse au signal mesurable tombant à l'intérieur de la seconde plage prédéterminée.

FIG. 1

FIG. 2

FIG. 3